# EUROPÄISCHE PATENTSCHRIFT

(11) **EP 1 159 177 B1**
(45) Veröffentlichungstag und Bekanntmachung des Hinweises auf die Patenterteilung: **03.09.2003**
(21) Anmeldenummer: 00912522.0
(22) Anmeldetag: 28.02.2000
(51) Int. Cl.: B60T 8/88, B60T 8/24, B60T 8/00

(54) **SCHALTUNGSANORDNUNG FÜR EINE KRAFTFAHRZEUG-BREMSANLAGE**
CIRCUIT ARRANGEMENT FOR THE BRAKE SYSTEM OF A MOTOR VEHICLE
CIRCUITERIE DESTINEE AU SYSTEME DE FREINAGE D'UN VEHICULE

(30) Priorität: 04.03.1999 DE 19909457; 26.06.1999 DE 19929414
(43) Veröffentlichungstag der Anmeldung: 05.12.2001
(73) Patentinhaber: Continental Teves AG & Co. oHG, 60488 Frankfurt (DE)
(72) Erfinder: FÜHRER, Jochen, D-64287 Darmstadt (DE)
(86) Internationale Anmeldenummer: EP0001656
(87) Internationale Veröffentlichungsnummer: WO00051864

(56) Entgegenhaltungen:
- EP-A- 0 856 446

## Beschreibung

Die Erfindung betrifft eine Schaltungsanordnung für eine Bremsanlage für ein Kraftfahrzeug mit einer ersten Achse und einer zweiten Achse, mit wenigstens einem Schaltkreis, der Sensorsignale aufbereitet und auswertet, Geschwindigkeit, Verzögerung und/oder Beschleunigung einzelner Räder ermittelt und hierdurch erhaltene Werte untereinander sowie mit vorgegebenen Schwellwerten vergleicht.

Eine derartige Schaltungsanordnung wird beispielsweise in Fahrzeugen mit einer kontrollierten Geschwindigkeit auf Gefällstrecken eingesetzt. Eine gattungsgemäße Schaltungsanordnung ist aus der Internationalen Patentanmeldung PCT/WO 96/11826 und aus der Europäischen Patentanmeldung EP 0 856 446 A2 bekannt. Die Schaltungsanordnung ist hierbei so konzipiert, daß durch eine Regelung des Bremsdrucks an allen vier Rädern eines Fahrzeuges eine vorgegebene Sollgeschwindigkeit eingestellt wird. Falls ein Rad zu blockieren droht, wird die normale ABS-Funktion aktiviert.

Die in der Europäischen Patentanmeldung EP 0 856 446 A2 und in der Internationalen Patentanmeldung PCT/WO 96/11826 dargestellte Schaltungsanordnung führt eine Kontrolle einer Geschwindigkeit bei Befahren einer Gefällstrecke durch (Hi1 Descent Control - HDC).

Die HDC-Funktion kann bei Auftreten eines Fehlers nicht abgeschaltet werden, da das Kraftfahrzeug bei einem plötzlichen Druckabbau in den Bremsen und bei Vorliegen einer Gefällstrecke stark beschleunigen würde. Der Fahrer des Kraftfahrzeuges könnte zwar die Bremse betätigen, jedoch besteht die Gefahr, daß das Fahrzeug bereits vor Betätigen der Bremse eine gefährlich hohe Geschwindigkeit erreicht hat.

Eine Beibehaltung des HDC-Modus bei einem Ausfall oder einer Abschaltung eines Antiblockiersystems des Kraftfahrzeuges ist gleichermaßen gefährlich. Bei einem steileren Gefälle kann es zum Blockieren der Räder und damit zum Verlust der Lenkfähigkeit kommen.

Der Erfindung liegt die Aufgabe zugrunde, eine Schaltungsanordnung zu schaffen, mit deren Hilfe ein gleichzeitiges Abbremsen und eine Beibehaltung der Lenkfähigkeit erreicht werden. Insbesondere soll die Schaltungsanordnung ein sicheres Befahren von Gefällstrecken ermöglichen. Ferner soll die Schaltungsanordnung möglichst auch bei einem Ausfall eines Antiblockiersystems funktionieren.

Erfindungsgemäß wird diese Aufgabe dadurch gelöst, daß eine gattungsgemäße Schaltungsanordnung so ausgestaltet wird, daß die Schaltungsanordnung eine Notlauffunktion aktivieren kann, bei der die Räder in einem Ausmaß abgebremst werden, bei welchem wenigstens ein Rad der ersten Achse und ein Rad der zweiten Achse eine Mindestgeschwindigkeit aufweisen.

Die Erfindung sieht vor, eine Schaltungsanordnung mit einer Notlauffunktion zu versehen. Die Notlauffunktion wird bei Auftreten eines Fehlers aktiviert, beispielsweise bei Ausfall oder Abschaltung eines Antiblockiersystems. Falls beispielsweise ein Radsensor defekt ist, wird auf eine spezielle Bildung einer Referenzgeschwindigkeit für eine Kontrolle der Abstiegsgeschwindigkeit umgeschaltet.
Es ist besonders zweckmäßig, daß die Schaltungsanordnung die Notlauffunktion bei einem Befahren von Gefällstrecken aktiviert.

Es ist vorteilhaft, daß die Schaltungsanordnung die Notlauffunktion bei einem Defekt des Schaltkreises und/oder eines Sensors aktiviert.

Ferner ist es zweckmäßig, daß die Notlauffunktion durch einen Schalter aktiviert werden kann.

Besonders vorteilhaft ist es, die Schaltungsanordnung so auszugestalten, daß die Schaltungsanordnung für jede der Achsen das schnellste Rad bestimmt, anschließend von den schnelleren Rädern der beiden Achsen das langsamere auswählt und die Geschwindigkeit des ausgewählten Rades so regelt, daß diese Geschwindigkeit im wesentlichen einer voreingestellten Sollgeschwindigkeit entspricht. Die Sollgeschwindigkeit hängt von der Fahrsituation ab und beträgt vorzugsweise 4 km/h bis 50 km/h.

Hierdurch ist sichergestellt, daß an jeder Achse mindestens ein Rad mit einer Mindestgeschwindigkeit oder einer höheren Geschwindigkeit läuft. Damit wird in einem eingeschränkten, aber für niedrige Geschwindigkeiten ausreichenden Maße die Lenkfähigkeit und Stabilität soweit aufrechterhalten, daß weiterhin eine Kontrolle der Abstiegsgeschwindigkeit erfolgt. Die bereits vor einem Fehler des Sensors und/oder des Schaltkreises erfolgende Kontrolle der Abstiegsgeschwindigkeit wird hierdurch bei einem Auftreten des Defekts gefahrlos fortgesetzt. Ferner wird ein unkontrolliertes Beschleunigen des Fahrzeuges verhindert, da nur ein Rad über der Sollgeschwindigkeit liegen darf.
Ein weiterer Vorteil der Erfindung ist, daß die Ausgestaltung des Antiblockiersystems, insbesondere sein Failsafe-Konzept, nicht geändert zu werden braucht. Das Antiblokkiersystem kann daher wie üblich abschalten, beziehungsweise in eine Notfunktion umschalten.

Es ist besonders zweckmäßig, die Schaltungsanordnung so auszugestalten, daß die Geschwindigkeit des ausgewählten Rades durch eine Modulation des Bremsdruckes an mehreren Rädern gesteuert wird.

Eine vorteilhafte Ausführungsform der Schaltungsanordnung zeichnet sich dadurch aus, daß die Steuerung so erfolgt, daß mindestens zwei Räder noch eine bestimmte Mindestgeschwindigkeit aufweisen.

Eine weitere bevorzugte Ausführungsform der Schaltungsanordnung zeichnet sich dadurch aus, daß die Steuerung so erfolgt, daß eine Beschleunigung eines oder mehrerer Räder gemessen und in die Geschwindigkeitsregelung einbezogen wird.

Ferner ist es zweckmäßig, daß die Schaltungsanordnung eine Referenzgeschwindigkeit ermittelt und Geschwindigkeiten von Rädern so regelt, daß die Referenzgeschwindigkeit im wesentlichen einer voreingestellten Sollgeschwindigkeit entspricht.

Diese Ausführungsform der Schaltungsanordnung ermöglicht es, anstelle oder zusätzlich zu der Geschwindigkeit des ausgewählten Rades eine Referenzgeschwindigkeit zur Regelung zu verwenden.

Hierbei ist es besonders vorteilhaft, daß die Referenzgeschwindigkeit aus einem von der Schaltungsanordnung ausgewählten Rad und wenigstens einem weiteren Rad gebildet wird.

Bei dem oder den weiteren Rädern, deren Geschwindigkeit in die Referenzgeschwindigkeit eingeht, handelt es sich beispielsweise um das schnellste Rad und/oder um übrige Räder des Kraftfahrzeuges.

Eine Anpassung der Schaltungsanordnung an Fahrstabilitätseigenschaften des Kraftfahrzeuges läßt sich dadurch erreichen, daß die Referenzgeschwindigkeit dadurch gebildet wird, daß die Geschwindigkeiten der Räder mit voneinander verschiedenen Gewichtungsfaktoren berücksichtigt werden.

Eine erste, einfach durchführbare Ausführungsform hiervon läßt sich dadurch erzielen, daß die Gewichtungsfaktoren fest sind.

Eine Anpassung an jeweilige Fahrsituationen läßt sich dadurch erzielen, daß die Gewichtungsfaktoren variabel sind.

Es ist besonders vorteilhaft, daß die Geschwindigkeit des ausgewählten Rades mit einem zwischen 0,4 und 0,9 liegenden Gewichtungsfaktor in die Bildung der Referenzgeschwindigkeit eingeht.

Es ist besonders zweckmäßig, die Schaltungsanordnung so auszugestalten, daß die Referenzgeschwindigkeit durch eine Modulation des Bremsdruckes an mehreren Rädern gesteuert wird.

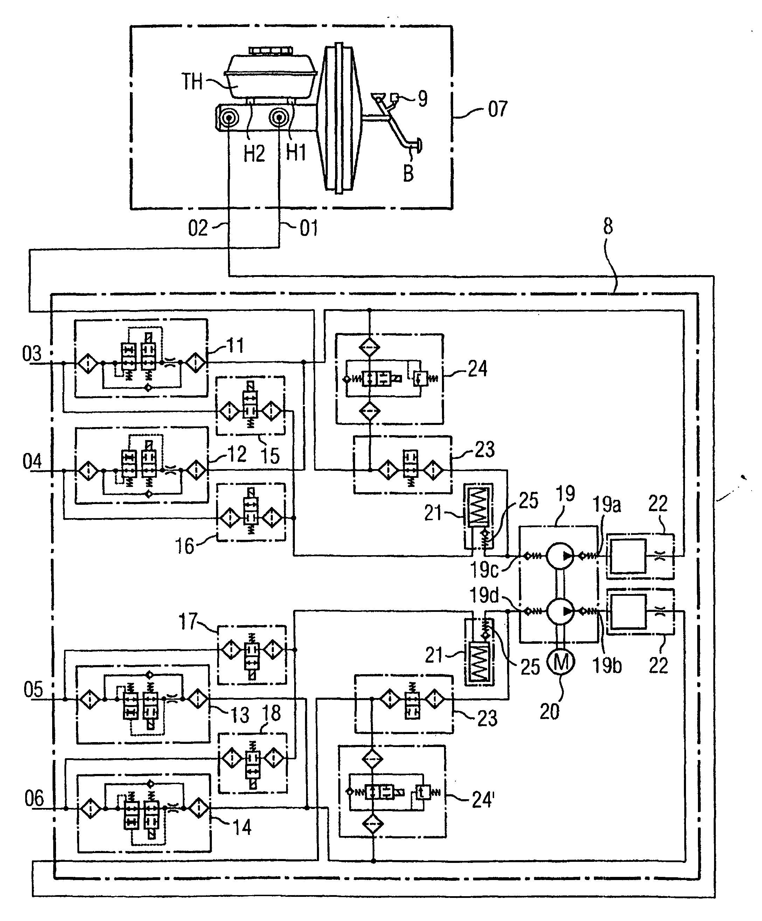

Weitere Vorteile, Besonderheiten und zweckmäßige Weiterbildungen der Erfindung ergeben sich aus der nachfolgenden Darstellung bevorzugter Ausführungsbeispiele anhand der Zeichnung.

Die Zeichnung zeigt ein Ausführungsbeispiel von Schalt- und Hydraulikelementen zur Implementierung eines erfindungsgemäßen Schaltungsaufbaus. Hierbei sind sich kreuzende Linien nur dann miteinander verbunden, wenn an dem Kreuzungspunkt der Linien ein Punkt markiert ist.

Die Schalt- und Hydraulikelemente bilden eine Zweikreisbremsanlage mit zwei Bremskreisläufen 1, 2. Die Zweikreisbremsanlage enthält einen Tandem-Hauptzylinder TH. Ein Bremspedal B ist über ein Gestänge und einen Bremskraftverstärker BV mit dem Tandem-Hauptzylinder TH verbunden. Der Tandem-Hauptzylinder TH besteht aus zwei hintereinander geschalteten Hauptzylindern.

Jeder der Hauptzylinder H1, H2 dient zur Betätigung eines Bremskreislaufes 1 beziehungsweise 2. Es ist besonders zweckmäßig, daß die Zweibremskreisanlage eine DiagonalAufteilung aufweist. Hierbei bilden jeweils ein Vorderrad und ein diagonal gegenüberliegendes Hinterrad einen Bremskreis. Bei Ausfall eines Bremskreises übertragen die zu diesem Bremskreis gehörenden Räder auch dann Seitenführungskräfte, wenn Räder des noch intakten Bremskreises blockieren.

Nachfolgend wird die Erfindung anhand einer DiagonalAufteilung der Bremsanlage dargestellt. Andere Ausführungsformen der Bremsanlage wie eine sogenannte Vorderachse-Hinterachse-Aufteilung oder eine Dreieck-Aufteilung sind jedoch gleichfalls möglich. Bei einer Vorderachse-Hinterachse-Aufteilung einer Bremsanlage gehören Vorderachse und Hinterachse jeweils zu getrennten Bremskreisen. Bei einer Dreieck-Aufteilung wirkt jeder Bremskreis auf die Vorderachse und auf ein Hinterrad.

Die dargestellte Bremsanlage mit zwei Bremskreisläufen 1, 2 mündet über weitere Hydraulikelemente in vier Druckleitungen 3, 4, 5, 6. Die Druckleitung 3 führt zu dem vorderen rechten Rad eines Fahrzeuges, in dem die Bremsanlage eingebaut ist, die Druckleitung 4 führt zu einer Scheibenbremse für ein hinteres linkes Rad, die Druckleitung 5 führt zu einer Scheibenbremse für ein hinteres rechtes Rad und die Druckleitung 6 führt zu einer Scheibenbremse für ein vorderes linkes Rad.

Die zwischen den Druckleitungen 3, 4, 5, 6 und den Bremskreisläufen 1, 2 befindlichen Hydraulikelemente bilden eine Hydraulikregeleinheit 8.

Das Bremspedal B, der Bremskraftverstärker BV und der Tandem-Hauptzylinder TH bilden eine Bremsbetätigungseinheit 7. In der Bremsbetätigungseinheit 7 ist ein Bremsbetätigungsschalter 9 angeordnet, der ein Niederdrücken des Bremspedals B registriert.

Die Druckleitungen 3, 4, 5, 6 zu den Scheibenbremsen sind jeweils mit einem Einlaßventil 11, 12, 13, 14 verbunden. Hierbei bezeichnet 11 das Einlaßventil zu der Druckleitung 3 zu der Scheibenbremse vorne rechts, 12 das Einlaßventil zu der Druckleitung 4 zu der Scheibenbremse hinten links, 13 das Einlaßventil zu der Druckleitung 5 zu der Scheibenbremse hinten rechts und 14 das Einlaßventil zu der Druckleitung 6 zu der Scheibenbremse vorne links.

Die Einlaßventile 11, 12, 13, 14 sind so gestaltet, daß sie in einem stromlosen Zustand offen sind. Zu einem Schließen ist ein elektrisches Signal erforderlich.

Jede der Druckleitungen 3, 4, 5 und 6 ist jeweils mit einem Auslaßventil 15, 16, 17 beziehungsweise 18 verbunden. Hierbei bezeichnet 15 das Auslaßventil zu der Druckleitung 3, 16 das Auslaßventil zu der Druckleitung 4, 17 das Auslaßventil zu der Druckleitung 5 und 18 das Auslaßventil zu der Druckleitung 6.

Die Einlaßventile 11, 12 sind mit einem Ausgang 19a einer zweikreisigen Hydraulikpumpe 19 verbunden. Die Einlaßventile 13, 14 sind mit einem Ausgang 19b der Hydraulikpumpe 19 verbunden.

Die Hydraulikpumpe 19 wird durch einen Motor 20 angetrieben. Die dargestellte Ausführungsform mit einer zweikreisigen Hydraulikpumpe ist besonders wirtschaftlich, da so nur eine Pumpe mit einem Motor 20 erforderlich ist. Ein anderer Aufbau, beispielsweise mit zwei getrennten Pumpen, ist alternativ möglich, erfordert jedoch größeren konstruktiven Aufwand und erhöht das Gewicht der Hydraulikregeleinheit 8.

Die Auslaßventile 15, 16 sind mit einem Eingang 19c der Hydraulikpumpe 19 verbunden. Die Auslaßventile 17, 18 sind mit einem weiteren Eingang 19d der Hydraulikpumpe 19 verbunden.

Durch Zwischenschaltung von Dämpfungskammern 22 zwischen den Ausgängen 19a und 19b der Hydraulikpumpe 19 werden abrupte Druckschwankungen der Hydraulikpumpe 19 abgedämpft, so daß diese Druckschwankungen nicht bis zu den Einlaßventilen 11, 12, 13 beziehungsweise 14 reichen.

Die Auslaßventile 15, 16, 17 und 18 sind mit Niederdruckspeichern 21 verbunden. Die Niederdruckspeicher 21 ermöglichen einen schnellen Druckabbau der Bremsflüssigkeit in den Scheibenbremsen.
Die Hydraulikregeleinheit 8 enthält ferner zwei elektrische Umschaltventile 23, die jeweils mit einem TCS-Trennventil 24 eines Traktionskontrollsystems verbunden sind.

Die elektrischen Umschaltventile 23 verbinden die Bremskreisläufe 1, 2 mit den Eingängen 19c und 19d der Hydraulikpumpe 19.

Die TCS-Trennventile 24 ermöglichen einen Druckaufbau in den Scheibenbremsen des Fahrzeuges über die Einlaßventile 11, 12, 13 beziehungsweise 14 unabhängig von einer Betätigung des Bremspedals B durch einen Fahrer des Fahrzeuges.

Die Bremsanlage wird durch eine Schaltungsanordnung gesteuert. Die Schaltungsanordnung enthält wenigstens einen Schaltkreis, der Sensorsignale aufbereitet und auswertet, Geschwindigkeit, Verzögerung und/oder Beschleunigung einzelner Räder ermittelt und hierdurch erhaltene Werte untereinander sowie mit vorgegebenen Schwellwerten vergleicht. Die Schaltungsanordnung ist so gestaltet, daß bei einem Defekt des Schaltkreises und/oder wenigstens eines Sensors eine Notlauffunktion aktiviert wird.

Während in einem normalen Betriebszustand das Antiblockiersystem ein Blockieren der Räder verhindert, wird bei einem Ausfall des Antiblockiersystems die Notlauffunktion so aktiviert, daß die Räder in einem Ausmaß abgebremst werden, daß wenigstens ein Rad der ersten Achse und ein Rad der zweiten Achse eine Mindestgeschwindigkeit aufweisen.

Die Schaltungsanordnung ist so gestaltet, daß sie insbesondere bei Befahren einer Gefällstrecke für jede der Achsen das schnellste Rad bestimmen kann. Nach der Bestimmung des schnellsten Rades von jeder der Achsen wird von den schnellsten Rädern der beiden Achsen das langsamere ausgewählt und die Geschwindigkeit diese Rades so geregelt, daß diese Geschwindigkeit im wesentlichen einer voreingestellten Sollgeschwindigkeit entspricht und daß dabei wenigstens eine Mindestgeschwindigkeit eingehalten wird.

Alternativ hierzu kann eine Referenzgeschwindigkeit gebildet und zur Regelung verwendet werden. Beispielsweise wird die Referenzgeschwindigkeit wie folgt gebildet:
V_{Ref}= 0,3 v_{schnellstes Rad} + 0,6 v_{ausgewähltes Rad} + 0,1 v_{zweitlangsamstes Rad}.

### Bezugszeichenliste

- A: Allradmodus
- B: Bremspedal
- BV: Bremskraftverstärker
- H1: Hauptzylinder
- H2: Hauptzylinder
- P: Parkstellung
- S: Zündungsstart
- TH: Tandem-Hauptzylinder
- 1: Bremskreislauf
- 2: Bremskreislauf
- 3: Druckleitung
- 4: Druckleitung
- 5: Druckleitung
- 6: Druckleitung
- 7: Bremsbetätigungseinheit
- 8: Hydraulikregeleinheit
- 9: Bremsbetätigungsschalter
- 11: Einlaßventil
- 12: Einlaßventil
- 13: Einlaßventil
- 14: Einlaßventil
- 15: Auslaßventil
- 16: Auslaßventil
- 17: Auslaßventil
- 18: Auslaßventil
- 19: Hydraulikpumpe
- 19a: Ausgang
- 19b: Ausgang
- 19c: Eingang
- 19d: Eingang
- 20: Motor
- 21: Niederdruckspeicher
- 22: Dämpfungskammer
- 23: Umschaltventil
- 24: TCS-Trennventil
- 24': TCS-Trennventil

## Patentansprüche

1. Schaltungsanordnung für eine Bremsanlage für ein Kraftfahrzeug mit einer ersten Achse und einer zweiten Achse, mit wenigstens einem Schaltkreis, der Sensorsignale aufbereitet und auswertet, Geschwindigkeit, Verzögerung und/oder Beschleunigung einzelner Räder ermittelt und hierdurch erhaltene Werte untereinander sowie mit vorgegebenen Schwellwerten vergleicht, **dadurch gekennzeichnet, daß** die Schaltungsanordnung eine Notlauffunktion aktivieren kann, bei der die Räder in einem Ausmaß abgebremst werden, bei welchem wenigstens ein Rad der ersten Achse und ein Rad der zweiten Achse eine Mindestgeschwindigkeit aufweisen.

2. Schaltungsanordnung nach Anspruch 1, **dadurch gekennzeichnet, daß** die Schaltungsanordnung die Notlauffunktion bei einem Befahren von Gefällstrecken aktiviert.

3. Schaltungsanordnung nach Anspruch 1 und/oder Anspruch 2, **dadurch gekennzeichnet, daß** die Schaltungsanordnung die Notlauffunktion bei einem Defekt des Schaltkreises aktiviert.

4. Schaltungsanordnung nach einem oder mehreren der Ansprüche 1 bis 3, **dadurch gekennzeichnet, daß** die Schaltungsanordnung die Notlauffunktion bei einem Defekt eines Sensors aktiviert.

5. Schaltungsanordnung nach einem oder mehreren der Ansprüche 1 bis 4, **dadurch gekennzeichnet, daß** die Schaltungsanordnung durch einen Schalter aktiviert werden kann.

6. Schaltungsanordnung nach einem oder mehreren der Ansprüche 1 bis 5, **dadurch gekennzeichnet, daß** die Schaltungsanordnung für jede der Achsen das schnellste Rad bestimmt, anschließend von den schnelleren Rädern der beiden Achsen das langsamere auswählt und die Geschwindigkeit des ausgewählten Rades so regelt, daß diese Geschwindigkeit im wesentlichen einer voreingestellten Sollgeschwindigkeit entspricht.

7. Schaltungsanordnung nach einem oder mehreren der Ansprüche 1 bis 6, **dadurch gekennzeichnet, daß** die Geschwindigkeit eines ausgewählten Rades durch eine Modulation des Bremsdruckes an mehreren Rädern gesteuert wird.

8. schaltungsanordnung nach einem oder mehreren der Ansprüche 1 bis 7, **dadurch gekennzeichnet, daß** die Steuerung so erfolgt, daß mindestens zwei Räder noch eine bestimmte Mindestgeschwindigkeit aufweisen.

9. Schaltungsanordnung nach einem oder mehreren der Ansprüche 1 bis 8, **dadurch gekennzeichnet, daß** die Steuerung so erfolgt, daß eine Beschleunigung eines oder mehrerer Räder gemessen und in die Geschwindigkeitsregelung mit einbezogen wird.

10. Schaltungsanordnung nach einem oder mehreren der Ansprüche 1 bis 9, **dadurch gekennzeichnet, daß** die Schaltungsanordnung eine Referenzgeschwindigkeit ermittelt und Geschwindigkeiten von Rädern so regelt, daß die Referenzgeschwindigkeit im wesentlichen einer voreingestellten Sollgeschwindigkeit entspricht.

11. Schaltungsanordnung nach Anspruch 10, **dadurch gekennzeichnet, daß** die Referenzgeschwindigkeit aus dem ausgewählten Rad und wenigstens einem weiteren Rad gebildet wird.

12. Schaltungsanordnung nach Anspruch 11, **dadurch ge** **kennzeichnet, daß** die Referenzgeschwindigkeit dadurch gebildet wird, daß die Geschwindigkeiten der Räder mit voneinander verschiedenen Gewichtungsfaktoren berücksichtigt werden.

13. Schaltungsanordnung nach Anspruch 12, **dadurch gekennzeichnet, daß** die Gewichtungsfaktoren fest sind.

14. Schaltungsanordnung nach Anspruch 12, **dadurch gekennzeichnet, daß** die Gewichtungsfaktoren variabel sind.

15. Schaltungsanordnung nach einem oder mehreren der Ansprüche 10 bis 14, **dadurch gekennzeichnet, daß** die Referenzgeschwindigkeit durch eine Modulation des Bremsdruckes an mehreren Rädern gesteuert wird.

## Claims

1. Circuit arrangement for a brake system for a motor vehicle comprising a first axle and a second axle, and at least one circuit which conditions and evaluates sensor signals, determines the speed, deceleration, and/or acceleration of individual wheels and compares resulting values one to the other and to predetermined threshold values,
**characterized in that** the circuit arrangement can activate an emergency function where the wheels are braked to the extent that at least one wheel of the first axle and one wheel of the second axle exhibit a minimum speed.

2. Circuit arrangement as claimed in claim 1,
**characterized in that** the circuit arrangement activates the emergency function when the vehicle rides on slopes.

3. Circuit arrangement as claimed in claim 1 and/or claim 2,
**characterized in that** the circuit arrangement activates the emergency function in the event of a defect in the circuit.

4. Circuit arrangement as claimed in any one or more of claims 1 to 3,
**characterized in that** the circuit arrangement activates the emergency function in the event of a defect of a sensor.

5. Circuit arrangement as claimed in any one or more of claims 1 to 4,
**characterized in that** the circuit arrangement can be activated by a switch.

6. Circuit arrangement as claimed in any one or more of claims 1 to 5,
**characterized in that** the circuit arrangement determines the fastest wheel for each of the axles, subsequently selects the slower one of the faster wheels of the two axles and controls the speed of the selected wheel so that this speed generally corresponds to a pre-adjusted nominal speed.

7. Circuit arrangement as claimed in any one or more of claims 1 to 6,
**characterized in that** the speed of a selected wheel is controlled by a modulation of the brake pressure on several wheels.

8. Circuit arrangement as claimed in any one or more of claims 1 to 7,
**characterized in that** the control is performed so that at least two wheels still exhibit a defined minimum speed.

9. Circuit arrangement as claimed in any one or more of claims 1 to 8,
**characterized in that** the control is performed so that an acceleration of one or more wheels is measured and included in the speed control.

10. Circuit arrangement as claimed in any one or more of claims 1 to 9,
**characterized in that** the circuit arrangement determines a reference speed and controls speeds of wheels so that the reference speed generally corresponds to a preset nominal speed.

11. Circuit arrangement as claimed in claim 10,
**characterized in that** the reference speed is formed based on the selected wheel and at least one further wheel.

12. Circuit arrangement as claimed in claim 11,
**characterized in that** the reference speed is formed by taking into consideration the speeds of the wheels with different evaluation factors.

13. Circuit arrangement as claimed in claim 12,
**characterized in that** the evaluation factors are invariable.

14. Circuit arrangement as claimed in claim 12,
**characterized in that** the evaluation factors are variable.

15. Circuit arrangement as claimed in any one or more of claims 10 to 14,
**characterized in that** the reference speed is controlled by a modulation of the brake pressure on several wheels.

## Revendications

1. Configuration à circuits pour un système de freinage d'automobile, comportant un essieu premier et un essieu secondaire, et au moins un circuit préparant et évaluant des signaux palpeur, déterminant la vitesse, le retard et/ou l'accélération des roues et comparant des valeurs ainsi obtenues l'un à l'autre et aux valeurs seuil prédéterminées,
**caractérisée en ce que** la configuration à circuits est capable d'activer une fonction d'opération de secours freinant les roues de sorte qu'au moins une roue de l'essieu premier et une roue de l'essieu secondaire montrent la vitesse minimum.

2. Configuration à circuits selon la revendication 1,
**caractérisée en ce que** la configuration à circuits va activer la fonction d'opération de secours aux passages descendants de l'automobile.

3. Configuration à circuits selon la revendication 1 et/ou 2,
**caractérisée en ce que** la configuration à circuits va activer la fonction d'opération de secours au cas de panne du circuit.

4. Configuration à circuits selon l'une ou plusieurs des revendications 1 à 3,
**caractérisée en ce que** la configuration à circuits va activer la fonction d'opération de secours au cas de panne de palpeur.

5. Configuration à circuits selon l'une ou plusieurs des revendications 1 à 4,
**caractérisée en ce que** la configuration à circuits peut être activée par un interrupteur.

6. Configuration à circuits selon l'une ou plusieurs des revendications 1 à 5,
**caractérisée en ce que** la configuration à circuits détermine pour chacun des essieux la roue la plus rapide et ensuite choisit la roue de vitesse moindre entre les roues plus rapides des deux essieux, ajustant la vitesse de la roue choisie de sorte que ladite vitesse essentiellement correspond à une vitesse nominale pré-ajustée.

7. Configuration à circuits selon l'une ou plusieurs des revendications 1 à 6,
**caractérisée en ce que** la vitesse d'une roue choisie est commandée par une modulation de la force de freinage sur plusieurs des roues.

8. Configuration à circuits selon l'une ou plusieurs des revendications 1 à 7,
**caractérisée en ce que** la commande est de sorte qu'au moins deux roues montrent encore une vitesse minimum prédéterminée.

9. Configuration à circuits selon l'une ou plusieurs des revendications 1 à 8,
**caractérisée en ce que** la commande est de sorte qu'une accélération d'une ou plusieurs des roues est mesurée et inclue dans l'ajustage de vitesse.

10. Configuration à circuits selon l'une ou plusieurs des revendications 1 à 9,
**caractérisée en ce que** la configuration à circuits détermine une vitesse de référence, ajustant la vitesse des roues de sorte que la vitesse à référence essentiellement correspond à une vitesse nominale pré-ajustée.

11. Configuration à circuits selon la revendication 10,
**caractérisée en ce que** la vitesse de référence est formée d'une roue choisie et au moins d'une roue supplémentaire.

12. Configuration à circuits selon la revendication 11,
**caractérisée en ce que** la vitesse de référence est formée **en ce que** les vitesses des roues à facteur de pondération différant l'un de l'autre sont prises en considération.

13. Configuration à circuits selon la revendication 12,
**caractérisée en ce que** les facteurs de pondération sont invariables.

14. Configuration à circuits selon la revendication 12,
**caractérisée en ce que** les facteurs de pondération sont variables.

15. Configuration selon l'une ou plusieurs des revendications 10 à 14,
**caractérisée en ce que** la vitesse de référence est commandée par une modulation de la force de freinage sur plusieurs des roues.
